# EUROPEAN PATENT APPLICATION

(11) **EP 3 839 424 A1**
(43) Date of publication of application: **23.06.2021**
(21) Application number: 19217980.2
(22) Date of filing: 19.12.2019
(51) Int. Cl.: G01C 1/04, G01C 15/00, G02B 7/00, G02B 23/00

(54) **GEODETIC SURVEYING TELESCOPE WITH IMAGE SENSOR FOCUS**

(71) Applicant: Leica Geosystems AG, 9435 Heerbrugg (CH)
(72) Inventor: MÜLLER, Josef, CH-9413 Oberegg (CH); SCHEJA, Jochen, A-6845 Hohenems (AT); STEIGER, Thomas, CH-9436 Balgach (CH)
(74) Representative: Kaminski Harmann

(57) **Abstract**

The invention relates to a surveying and/or layouting telescope (lb), for example for a total station, laser templator or multi station. The surveying and/or layouting telescope (lb) has an optical axis (5) and comprises at least one refractive and/or diffractive optical element (3) such as a lens and comprises an image sensor (13, 22, 60, 70, 80) such as a CCD- or CMOS-sensor, wherein the optical element forms an optical beam path such that incoming light is directed to the image sensor (13, 22, 60, 70, 80). The telescope (lb) further comprises a movable image sensor positioning member (2b) for changing the position of the image sensor (13, 22, 60, 70, 80) along the optical axis (5) in order to adjust the telescope focus.

## Description

The present invention relates to a surveying and/or layouting telescope and method for adaption of the focus thereof.

Instruments for measuring or projection e.g. of point coordinates are known in the art, for instance embodied as total stations, multi stations, laser scanners, laser templators or laser trackers. Such surveying or layouting appliances for tracking, marking and/or measuring spatial points on surfaces of a structure or object are particularly used for measuring or construction of buildings, their interiors or extensions. Using a measurement beam such as a laser beam, surface points of an object can be measured by determining distance, e.g. based on time of flight or interferometry, and targeting direction or direction of an optical axis of the instrument (and thus direction of emittance of the measurement beam). Hence, the distance and angle from a measuring device to one or more target points to be surveyed are recorded as spatial standard data. On the other hand, planned position data, e.g. based on a digital building plan or CAD-data, can be projected in a position true manner on an object's surface by a laser beam for layout or stake out purposes. Such instruments are used for traditional geodesy (land surveying) or for geodetic measuring in the industry (e.g. 3D-coordinate acquisition of workpieces for quality control) as well as for accurate construction of buildings like streets, tunnels or houses and for interior construction or assembly tasks, e.g. using templating, by designers like architects, kitchen makers, glaziers, tilers or staircase builders, e.g. for as-built data capture. It is emphasized that, in the present application, the terms "geodesy" and "geodetic" are not limited to the scientific discipline that deals with the measurement and representation of the surface of the earth and the seafloor, but relate in a broad sense to measuring, surveying and position determining of objects.

Modern geodetic instruments such as total stations have microprocessors for the digital processing and storage of captured measurement data. The devices generally have a compact and integrated construction, wherein usually coaxial distance measuring elements and also computer, control, and storage units are provided in one device. Depending on the expansion stage of the total station, means are integrated for motorization of the target optics, for reflector-free distance measurement, for automatic target search and tracking, and for remote control of the entire device. In addition or alternative to object point measuring with a laser beam, projection of visible or invisible points or lines by a laser beam is used for providing positional reference points or lines serving as a reference for either the human eye or for electronic systems and also allowing automatic positioning or machine guidance. Here, the reference lines are usually created by widening a laser beam, which is possible for straight lines in particular, or else by rotating projection of a laser point.
Known geodetic instruments of the generic type such as construction surveying appliances, instruments for digital templating or layout devices typically comprise a base, an upper part mounted so as to be able to rotate about an axis of rotation on the base, and a sighting unit or telescope, mounted so as to be able to swivel about a swivel axis, with a laser source, which is designed to emit a laser beam, and an imaging sensor or detector, for example equipped with an orientation indicating functionality for indicating an orientation of the sighting unit with respect to a spatial point as a sighting point, and also with a distance determining detector for providing a distance measuring functionality. By way of example, the orientation indicating functionality may be a reticle or crosshair in the viewfinder of a camera.

For aiming at or targeting a target point to be measured, devices of the type in question have a targeting unit like a telescope. Such a surveying or layouting telescope is required for example for direct visual observation through an eyepiece and/or for image recording by a camera. Within the scope of geodesy, the coupling of a pure observation with a distance measurement to a sighted target object is of particular importance here, for the purposes of which, in addition to the optical system components for a telescope beam path, an integration of optical assemblies for coupling and decoupling transmission rays or distance measuring rays is required in a corresponding geodetic instrument. A required high measurement accuracy of the distance measurement, in particular, demands very stable positions and angles of the involved beam paths and assigned assemblies.

The optical setup of surveying or layouting telescopes is, in particular, determined by the function of the telescope, for example in view of light intensity, imaging quality and focusing and magnification mechanisms. In contrast to optical measurement instruments, such as e.g. an electro-optical rangefinder with an optical receiver for receiving beams, the beams in the telescope are received by an imaging sensor such as a CCD or CMOS sensor, for the purposes of which imaging with a corresponding very high quality is necessary. The generated image can then be displayed on a display of the geodetic instrument or a connected external display device, e.g. a tablet or smartphone. A challenge for engineers in the field of optics lies in the production of telescopes with a short installation length and, nevertheless, a generic high imaging quality. In order to achieve this imaging quality, it is necessary to correct optical aberrations, such as spherical and chromatic aberration, coma and distortion. These corrections are performed by means of optical components, wherein parameters such as the curvature of lenses, the number, the material with the associated optical properties and the arrangement of the corrective components, and also the highly precise manufacturing of same and the exact alignment in the telescope contribute to the image quality.

As said, modern geodetic devices additionally have a camera, which is integrated into the telescopic sight, for capturing an image, wherein the captured image can be displayed in particular as a live image on a display screen of the total station and/or a display screen of the peripheral device - such as a data logger - used for the remote control.

According to the state of the art, the optical system or the optical viewing channel of the targeting unit contains in particular an objective lens group, a focusing lens group, and an ocular, which are arranged in this sequence from the object side. The position of the focusing lens group is set in dependence on the object distance. Thus, a sharp object image results on an optical element, which can be arranged in the focal plane, having targeting marking (in particular reticle or graticule, or plate having crosshair marking and hash markings). This optical element having the image created in this plane can be observed through the ocular.

A coaxial camera (for example, having CCD or CMOS surface sensor), which can be provided in addition or alternative to the direct vision channel, can be arranged in a (further) image plane provided in the telescope optics. If necessary, decoupling of a partial light beam via a beam splitter can be provided, so that an image (or a series of images or a video stream) can be recorded through the objective using the camera.

Furthermore, an additional separate transmitting and receiving channel branch can be provided for the coaxial electronic distance measurement. In addition, common surveying devices currently comprise an automatic target tracking function (ATR: "automatic target recognition"), for which a further separate ATR light source - for example, a multimode fiber output, which emits light having a further defined wavelength - and a special ATR camera sensor are additionally integrated in the telescope.

The optics of the targeting unit can comprise a manual focus - for example, a set screw for changing the focal position of the optics - or can have an autofocus. Thereby, the focal position of at least one optical element of the optics is changed, for example, by servomotors. Automatic focusing units for telescopic sights of geodetic devices are known, for example, from DE 197 107 22, DE 199 267 06, EP 1 081 459, EP 1 662 278, DE 100 33 483, DE 10 2006 007 013 or DE 199 495 80. Disadvantages of such a focusing optics are that a heavy mass of one or more lenses has to be moved for change of focus which means high energy consumption and inertia, thus high latency and much space required, resulting in a bulky telescope.

Aiming at a target can generally be performed either using the physical crosshair provided in the telescope/telescopic sight or by means of a live image, which is displayed to the user in the display screen of the base station (or the data logger), and an electronic crosshair overlaid thereon, which is provided by the camera arranged coaxially in the telescopic sight as a targeting unit of the total station. Accordingly, the user can appropriately align the geodetic instrument, e.g. total station, on the desired target, which is recognizable in the live image, on the basis of the live image, for which an artificial (i.e., electronic) crosshair can be displayed superimposed in the displayed live image of the coaxial camera.

The image position at which the electronic crosshair is to be displayed so that the spatial direction thus indicated corresponds as accurately as possible to the direction which is indicated by the physical optical element, which is integrated in the telescope, having targeting marking (i.e., the reticle, for example). This is independently of whether the direction indicated by the reticle (targeting direction) itself also has an error in relation to the actual measurement direction (i.e., the direction in which finally the measurement radiation is emitted and therefore represents the measurement direction). This direction error between targeting direction and measurement direction is handled in this case independently of the problem of the positioning of the electronic crosshair in the image and is to be considered separately.

Since a physical recalibration (realignment) of the targeting direction indicated by the physical optical element having targeting marking, so that it corresponds to the measurement direction, can be complex and no differences are to exist in the case of targeting via looking through the telescope in comparison to targeting via observation of the display image having the artificial crosshair, in an ideal video total station, the artificial crosshair is to indicate as exactly as possible the same (targeting) direction as the physical targeting marking. To display the artificial crosshair as faithfully as possible at a corresponding point in the display screen image, a calibration (with determination of corresponding calibration parameters) is carried out at the factory after assembly of the surveying device. Such a factory calibration establishes a relationship between the measurement coordinate system of the surveying device and the camera coordinate system in consideration of the present surveying device geometry. Examples of such known factory calibrations are described, for example, in patent literature publications US 7,982,866, US 7,623,224, DE 11 2006 003 999 and EP 1 695 030, wherein, however, a procedure based on camera image recordings of known target marks, which is complex with respect to the required environment and the measurement conditions, is required. In this context, calibration parameters with respect to standing axis and tilt axis errors (direction errors) or a displacement of camera component parts can also be ascertained using such factory calibrations in a known manner.

However, such errors do not remain stable in the course of time. Thus, for example, they are influenced by physical shocks (for example, during transport), by temperature influences, or by other material properties, which vary in the course of time.

It is therefore an object of the invention to provide an improved surveying and/or layouting telescope.

It is a further object of the invention to provide a surveying and/or layouting telescope with improved (auto-)focus functionality.

This object is achieved by the realization of the characterizing features of the independent claims. Features that develop the invention in an alternative or advantageous manner can be gathered from the dependent patent claims and also the description including the descriptions of figures. All embodiments of the invention that are illustrated or disclosed in some other way in this document can be combined with one another, unless expressly stated otherwise.

The invention relates to a surveying and/or layouting telescope having an optical axis and comprising at least one refractive and/or diffractive optical element such as a lens and comprising an image sensor, for example a CCD- or CMOS-sensor. The optical element forms an optical beam path such that incoming light such as surveying light is directed to the image sensor. Optionally, the telescope further comprises a measurement beam source such as a laser source, beam guiding optics such as a beam combiner for guiding the measurement beam such that it is emittable in direction of the optical axis onto an object to be measured through the optical element, a beam decoupler for separation of measurement light reflected by the object and a light detector, in particular an avalanche photo diode, for detecting at least part of the measurement beam reflected by the object.

According to the invention, the telescope further comprises a movable image sensor positioning member for changing the position of the image sensor along the optical axis in order to adjust the optical focus of the telescope.

Thus, for a change of the telescope's focus a relative distance between optical element and image sensor is changed by moving the image sensor positioning member, e.g. manually or driven by a telescope's autofocus controller, and therewith the image sensor. There is no unconditional need for an optical element such as one or more lenses which have to be moved for focus adjustment as is in prior art but the optical element can be fixed.

As said, the image sensor positioning member is optionally controlled by an autofocus controller. Thereby, the autofocus adjustment is based on contrast, detected phase or a distance to an imaged object (point), whereby the distance can be determined either based on the image sensor signals or by additional means such as an additional electronic distance meter.

As an option, the image sensor positioning member comprises as a linear movable slide carrying the image sensor. Therein, the slide is preferably contactlessly preloaded with respect to at least one, in particular two, guide rail or guide pin, the guide rail or guide pin extending along the optical axis.

Said preloading of the slide is preferably effected by magnetic force. For instance, the slide comprises a ferromagnetic piece as an opposite piece to a permanent magnet for providing said magnetic force. Using magnetism, preloading is advantageously contactless.

As another option, the image sensor positioning member is embodied as a solid state articulated coupling or parallelogram swivel joint. These embodiments provide likewise a slide with magnetic preloading a forward and backward position change without hysteresis and/or with high precision.

As another option, a positional accuracy of the image sensor positioning member along its displacement path is dependent on its position. Preferably, the focus position accuracy decreases with increasing distance of the focused object, i.e there is higher position accuracy in the near field than in the far field. Said the other way round, the positional tolerance in far field focus position is relaxed compared to the tolerance for the near field focus position. Thus, high position precision is provided in a targeted manner without being exuberantly, e.g. high manufacturing or calibration demands are advantageously limited to certain member position regions. The present invention allows a shorter displacement path compared to surveying or templating telescopes of the state of the art, allowing advantageously for a compacter telescope design. On the other hand, this results for one thing in higher demands for focus position accuracy. By said targeted configuration of the member position accuracy, these higher demands advantageously are softened or relaxed regarding the telescope as whole.

As preferred option, the telescope comprises at least one position sensor for measuring a translational and/or rotational position of the image sensor position member and/or image sensor, e.g. one or more light barriers, position encoders or opto-electronic distance sensors. This allows for an observance or control of the positioning precision.

Said the position sensor is optionally designed for measuring position only within a part of the displacement path of the image sensor position member. For example, only a part, e.g. half or a third of the maximal displacement path, including the minimal distance of the image sensor positioning member to the optical member is controlled with respect to position, the other half or other two thirds are not measured. This again is an advantageous varying control of positional accuracy for correct focus adjustment in that it is e.g. measured only within near field positions and not within far field where it is not as critical as already described above.

As an alternative smart targeted observance or control of position (accuracy), there is position measurement along the whole displacement path but the precision or accuracy of the position measurement is dependent on the position of the image sensor positioning member along its displacement path (or the distance of the position member/image sensor relative to the optical member). For example, the measurement precision is lower in far field focus position than for a near field focus position of the image sensor. Constraining the position measurement of the image sensor (position member) either completely and/or regarding allowable measurement tolerance can allow for reduction of complexity of the telescope and thus save time and/or energy whilst providing tailor made position control. Of course instead of being an alternative, this targeted position sensing can also be combined with above described restriction of the position sensing to one or more zones, i.e. within such a zone, the measurement accuracy is varying.

Additionally or alternatively, all six degrees of freedom are measurable. Particularly in this case, it is an advantage to provide (high precise) position measurement exactly where needed. Accordingly, as an option, the number of degrees of freedom measured varies along the displacement path, e.g. within a certain position range only one DoF is measured, e.g. the position along the optical axis, and only within another position range, one or more additional DoF are measured.

In further embodiments, deviations of a perfectly aligned movement along the optical axis of the image sensor positioning member are compensated by a relocation of a digital crosshair of the telescope and/or by selection of an image section.

In some embodiments, the telescope comprises a vario drive for driving the image sensor positioning member, in particular steplessly variable. For example, the vario drive comprises a spindle with variable pitch or a cam plate. This provides a non-linear behaviour of the drive such that e.g. the speed of focus change is dependent on the position of the position member along the displacement path.

In some further embodiments, the image sensor is shiftable in a direction substantially perpendicular to the optical axis for effecting imaging with pixel shift.

The invention relates also to a method for focus adjustment of a surveying and/or layouting telescope having an optical axis, the telescope comprising a at least one refractive and/or diffractive optical element, in particular a lens, and an image sensor, wherein the optical element forms an optical beam path such that incoming surveying light is directed to the image sensor. According to the method for an adjustment of the telescope's focus, the image sensor is moved along the optical axis.

Optionally, the method comprises an automatic calibration for compensation of position errors of the image sensor along its displacement path along the optical axis, wherein at least two automatically selected features of the environment situated in different distance to the telescope are automatically focused in at least two different poses of the telescope each.

As another option, the accuracy of said calibration depends on the focus position of the image sensor. For example, the accuracy of error compensation (for position errors in direction of the focus displacement) is higher for near field position than for far field position, e.g. the error compensation is lower in far field focus position than for near field focus position (even comprising the option of no error compensation at all for far field).

The invention in addition relates to a non-transitory computer program product, comprising program code which is stored on a machine-readable medium, in particular of a geodetic instrument comprising a surveying and/or layouting telescope according to the invention, and having computer-executable instructions which when executed cause a computer to perform the method according to the invention.

The present invention provides the advantages of a geodetic telescope designed for surveying, templating and/or layout/stakeout purposes resp. instruments wherein a variable optical focus is enabled by position change of an image sensor. No optical elements such a glass lenses have to be shifted, which reduces weight compared to known surveying and/or layouting telescopes. In addition, there is much higher focus speed enabled or much lighter and more frugal actuators can be used, in particular due to severely reduced inertia and reduced focus path. Thus, a lighter and more compact telescope can be designed, enabling amongst others a more user friendly and convenient handling of the measuring instrument comprising the telescope which mainly defines size of the instrument.

The geodetic telescope according to the invention is described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention.

Specifically,
- figures 1,2: illustrate geodetic telescopes as known in the art;
- figure 3: shows a first schematic example of a geodetic telescope with an image sensor movable for focus adjustment;
- figure 4: depicts an embodiment of a movable image sensor positioning member;
- figure 5: illustrates a further development of a device depicted in figure 4;
- figures 6a,b: illustrate still further developments of a device depicted in figure 4 or 5;
- figure 7: shows a chart schematically depicting dependence of position adjusting of the image positioning member of its position;
- figure 8: illustrates another embodiment of a movable image sensor positioning member; and
- figure 9: illustrates still another embodiment of a movable image sensor positioning member.

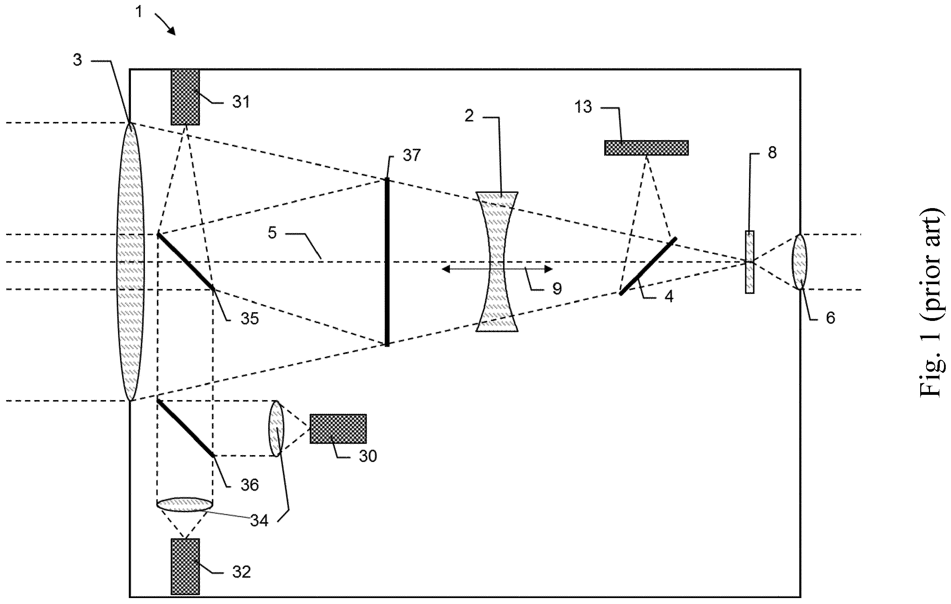

Figure 1 illustrates schematically a surveying and/or layouting telescope 1 according to prior art. Such a telescope 1 is for instance part of a geodetic measuring instrument such as a total station or electronic tachymeter, or such as a laser templator which is used amongst other for digital templating in laser based measuring of objects such as cabinets or installations in the inner or on the outside of buildings and establishing a digital 2D or 3D plan of these objects as built, whereby also a position true laser based projection of planned positions such as anchor points or boreholes in course of layout or stakeout tasks can be effected, too.

The telescope 1 comprises an objective 3, an focusing optics 2, a camera or image sensor 13 - aligned coaxially to the optical axis 5 of the telescope 1, which is basically defined by objective 3 - for capturing a camera image, a crosshair graticule 8, and an ocular 6.

The camera sensor 13 can be connected in this case to an electronics graphic processor for generating a display image from the captured camera image. The graphic processor is in turn connected to a display screen (both not shown), so that the generated display image can be displayed on the basis of the display screen. The objective 3 can also, for example, be constructed with multiple lenses or can be embodied as panfocal - having variable depth of field.

For the distance measurement and the automatic target search function, an EDM laser source 30 or a fine targeting light source 32 are provided, wherein the EDM laser beams or the fine targeting beams are formed by lenses 34 and coupled and decoupled appropriately on the basis of a first and second beam combiner 35, 36 - for example, beam splitter surfaces having dichroic coating. As image sensor 13 and EDM are both aligned to optical axis 5 and thus share the same optical axis 5, the camera comprising image sensor 13 is an on-axis camera, allowing to view an image exactly in direction of the targeting axis 5 without a parallax.

The EDM laser source 30 can, for example, emit EDM laser beams in the visual range - for example, having a wavelength of 630 nm - onto an object so that a measurement spot is visible on the target object. Alternatively, the EDM laser is in the infrared range, e.g. NIR, and the telescope comprises a second visible laser source for pointing. The telescope 1 can further comprise an attenuator and/or divergence lense (not shown) which can temporarily or if needed by inserted into the path of the measurement beam for adaption to different types of measurement objects, e.g. in case of targets like prisms and high reflective metal objects. As a further option, the telescope 1 can comprise optical filters to block incoming unwanted light and/or a diffusor for beam homogenisation (not shown). Such a geodetic surveying and/or layouting telescope 1 allows for precise distance determination with the EDM from object distances of about 0,3m up to several hundred meters or even kilometres.

Beam decoupler 37 can be provided in this case between the first beam combiner 35 and the focusing optics 5, which decouples the EDM laser beams, but in contrast advantageously transmits the visual spectrum (VIS) in as unobstructed a manner as possible towards VIS-mirror 4 and then image sensor 13. The decoupled EDM laser beams are guided by the beam combiner 35 onto an EDM receiver 31.

The telescope 1 further comprises a focusing lens 2 situated in the beam path (of the incoming surveying light) defined by objective 3. By variation of the position of the focusing lens 2 along the optical axis 5 (indicated by arrow 9), the focus of the telescope 1 is adaptable. Alternative to the illustration, the focusing element 2 can also be designed with multiple lenses. Often, the focusing lens 2 has a stable, precisely reproducible position for objects in the infinite, so that the best possible achievable accuracy can be ensured in the automatic fine targeting.

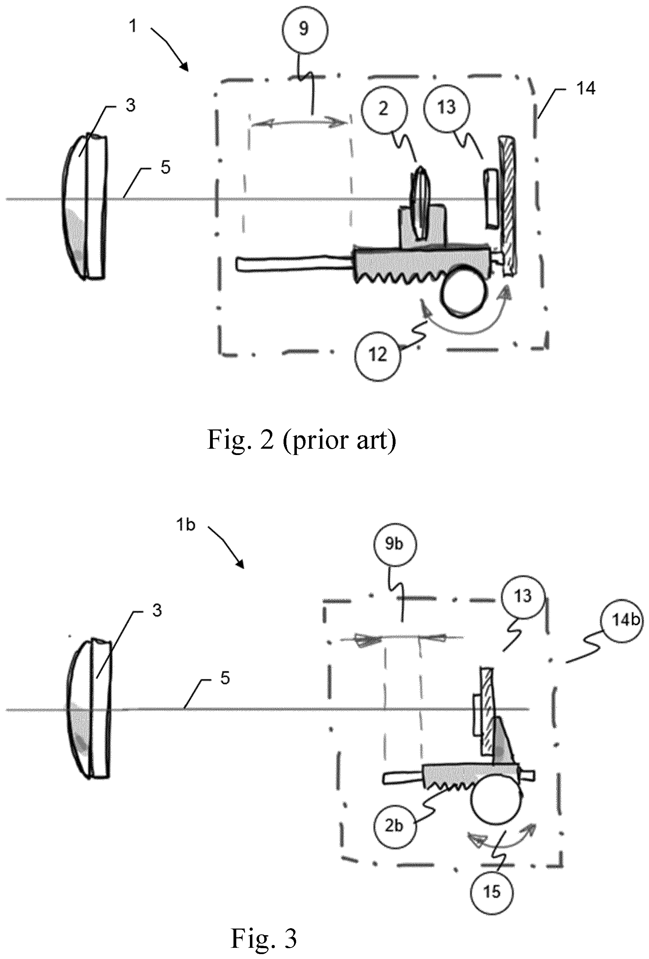

Figure 2 is another side-view sketch of a telescope 1 as known in the art. For better clearness, only the optical element 3 is shown together with focus optics 2 and image sensor 13 . Optical beam path along optical axis 5 defined by main objective 3 is such that incoming light arrives at image sensor 13 where it is detected. Focus optics 2 can be moved in direction of optical axis 5 along a displacement path 9 within the light beam path in order to change focus by an actuator 12, either manually or automatically (autofocus). Thus by moving focus element 2, the optical focus can e.g. be changed from infinity to focus on objects in the near field. An installation space 14 is needed according to the required displacement path 9.

Figure 3 shows to the contrary a telescope 1b according to the invention in a side view.

In contrast to prior art surveying and/or layoutingtelescopes 1 as depicted in figures 1 and 2, surveying and/or layouting telescope 1b as shown in figure 3 has no more focusing optics 2. Instead, the position of the image sensor 13 can be changed in direction of the optical axis 5 by a movable image sensor positioning member 2b. By linear movement of image sensor positioning member 2b and therewith the image sensor 13 attached thereto, the distance to the optical element 3 can be adapted as needed in order to position the image sensor 13 at the focus point. Hence, for a variation of the optical focus of telescope 1b, only the image sensor positioning member 2b has to be moved.

A first advantage is that an optical focus unit 2 is unneeded, which facilitates manufacturing and reduces weight. In addition, the mass to be moved is smaller compared to prior art, which means lower inertia and latency. Above that, actuator 15 for moving image sensor positioning member 2b in case of an autofocus telescope 1b (controlled by an autofocus controller; not shown) can be designed "smaller" than its counterpart 12 of prior art. Such a "light" actuator 15 means a further reduction of weight and of power consumption. On the other hand, with more powerful actuators, a much higher focus speed is possible as mass and displacement distance are reduced.

A motorized drive comprises for example a (folded) stepper motor with a belt for power transmission, a voice coil, a synchron motor, a DC motor, brushless-DC (BLDC) motor, electrostatic drive, a spindle or a piezo drive. Thereby an automatic change of focus is for example based on a determined contrast of the image and/or is light phase based. As another option, a distance to the imaged object is used for focus adjustment, the distance e.g. measured with the EDM described with respect to figure 1.

Another advantage is a reduced size of displacement 9b needed for maximal change of focus, e.g. infinity to near. The displacement path 9b from a far positioning to a near positioning can for example be reduced up to 50% compared to the prior art extent 9. Thus, the installation space 14b can accordingly be designed considerably smaller which allows for a compacter design and further reduced weight of the telescope 1b as a whole compared to known telescopes 1. A less extensive displacement or shorter path 9b for a certain change of focus means above that acceleration of the moving member 2b with image sensor 13 can be reduced.

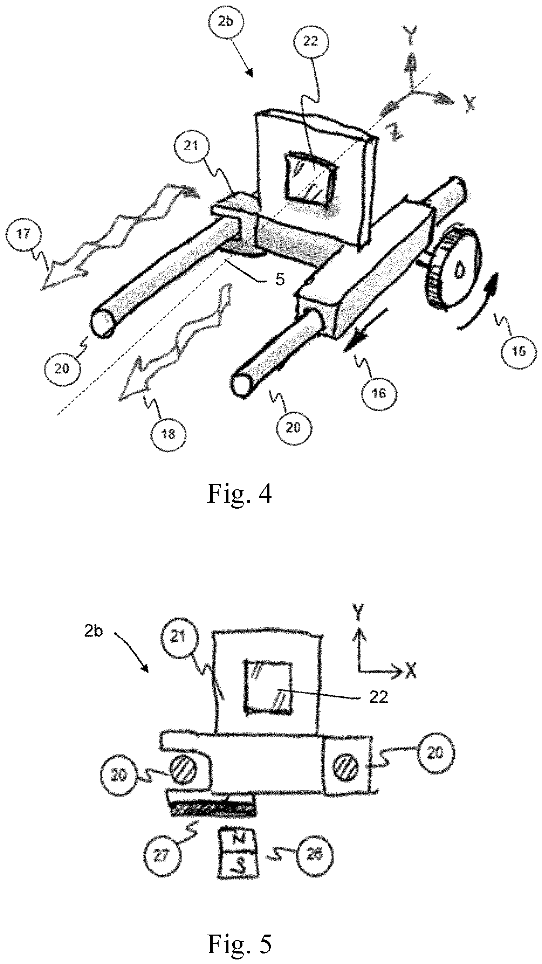

Figure 4 shows an embodiment of a moveable image sensor positioning member 2b in a 3D-view.

The moveable image sensor positioning member 2b holds an image sensor 22, the image sensor 22 extending in an xy-plane, perpendicular to optical axis 5 (z-direction). The image sensor 22 thus can be moved linearly in z-direction (indicated by arrow 16). Therefore, it is slideable guided by two guiding rails 20 extending in z-direction and manually or actuated by a motor with drive 15. The slide 21 is thus movable supported by rods 20.

In practise, there is disturbing roll, shift and/or tilt about one or more axis x,y,z in course of the movement 16 along the displacement path as indicated by arrows 17 and 18. This leads to measurement errors.

The errors can be reduced using a high precision fit or socket or recirculating ball bushes or ball bearings, however all of which are elaborate Another and preferred solution is shown in figure 5 below.

Figure 5 shows in a cross sectional view (view in direction of the optical axis or axis z) a further developed embodiment of an image sensor positioning member 2b carrying image sensor 22.

Depicted are slide 21 bordered at the left and at the right by guiding pins 20. The right pin 20 is completely encompassed by slide 21. The pin 20 at the left side is openly encompassed. As an alternative to the (all-a)round geometry as depicted, the slide 21 can comprise a V-like notch facing guide rail 20. Such a design is advantageously with respect to compensation of torque.

The slide 21 comprises at the left location (the non-drive side) a ferromagnetic piece 27 (a piece made from any material responding to magnetic force). Ferromagnetic element 27 has a lineary extending permanent magnet 26 running in z-axis as counterpart. Due to the magnetic force or attraction of magnet 26 to ferric piece 27, the slide 21 is preloaded with respect to guiding rail 20. Different to the figure, preferably the configuration is the other way round i.e. the slide 21 comprises a permanent magnet 26 and the ferromagnetic counterpiece 27 is situated at the guiding rail 20, e.g. lineary extending throughout the z-axis. Of course, either an extending ferromagnetic piece or such a magnet can consist of or be divided into subpieces instead of being one monolithic block.

This magnetic preload reduces or prevents said deviations from the ideal linear movement as described with respect to figure 4 and in addition is advantageously contact free. Thus, there is no tribological interface which otherwise would effect losses, wearing and a position hysteresis. Generally and independent of the specific embodiment, (remaining) position errors of the image sensor positioning member 2b or image sensor 22, e.g. deviations from the ideal linear movement or deviations from a perfect alignment of the visible or image sensor target axis to the measurement target axis of the distance laser beam, are optionally compensated by an automatic calibration procedure. According to this calibration method, at least two features (objects) of the environment of the surveying device comprising the surveying telescope are automatically focused in at least two different poses of the telescope in each case, e.g. in a first stationing of the surveying device and a second stationing and/or in course of a horizontal scan by the surveying instrument. Thereby, suitable or optimal features are selected automatically by the device, e.g. a feature in the near field and another one in the far field. The selection can for instance be done based on a rough scan of the environment or part of it.

As a further option, deviations from the ideal linear movement (non-parallelity of the image sensor's trajectory or tilt with respect to the optical axis) are compensated by relocation or shift of the telescope's digital crosshair (e.g. crosshair graticule 8 as shown in figure 1) and/or by selection of an image section (an section of the image is cut out in such a way that the targeting axis matches the center pixel of the section). As an option, such a magnetic configuration is further developed to a sort of magnetic or maglev monorail, using an electromagnet 26 not only for preloading but also for driving the slide 21 along the optical axis. As another option, magnetic force effected by magnet 26 can be slightly varied in order to shift image sensor 22 in a direction substantially perpendicular to the optical axis z (in xy-plane) for effecting imaging with pixel shift. This means that for example with a Bayer-pattern RGB sensor 22, four photos are taken in a row -which then are composed to one final image- with a shift of sensor 22 one pixel in between the subsequent photos such that sensor 22 captures the full RGB-data for each pixel. Such a shift during imaging reduces De-Bayering-effects and enhances image quality, in particular sharpness. Pixel shift can optionally be effected using a piezo drive.

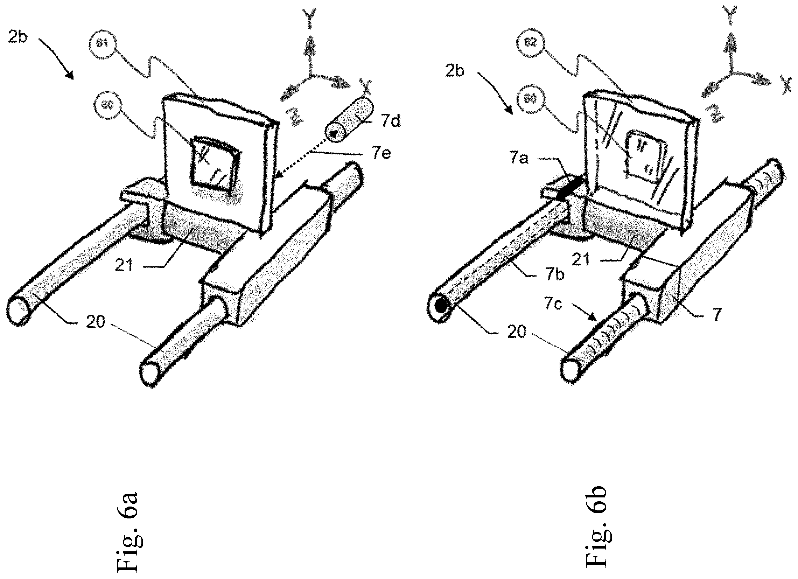

Figures 6a and 6b, modelled after figure 4, show further embodiments of an image sensor positioning member 2b with an image sensor 60, whereby in both examples position 7-7d sensors are present for measuring a position of the image sensor positioning member 2b respectively the image sensor 60.

In the example of figure 6a, the positioning member 2b carries a flat component 61, e.g. a PCBA, arranged in the x-y-plane, whereto the image sensor 60 is attached. For measuring a position of the flat component 61 or the image sensor 60, a radiation based distance sensor 7d of the telescope emits a measurement beam, e.g. laser beam, 7e towards the back side of piece 61 or image sensor 60 and detects reflected measurement light. Based on the detection, a distance and hence the position of piece 61 or image sensor 60 is determined -e.g. based on time of flight or interferometrically or triangulation principle, either as an absolute value or incremental- at least in z-direction (position along the displacement path). If a position sensitive detector is used, a tilt with respect to the xy-plane can in addition be determined based on the position of the returned laser beam on the detector. For a better signal strength, the back side of piece 61 or 60 can be of high reflectance or at least comprises such an area.

Alternatively or additionally, a position of the image sensor 60 and/or the positioning member 2b is determined using light by one or more light barriers (not shown), e.g. extending in x-direction at one or more locations along the z-axis.

Figure 6b shows another example. Therein, the image sensor 60 is cemented onto a thin, optical transitive planar plate 62. For determining a position of the image sensor 60 resp. the positioning member 2b, there are linear position encoders present. At the right side, the guide rail 20 comprises a scale with encoder elements 7c, e.g. optic, magnetic or capacitive readable marks. The scale 7c is read by a read head 7 as in principle known in the art, e.g. an opto-electronic read head, the read head 7 situated at the right side of slide 21. Thus, a position of read head 7 relative to scale 7c and hence of slide 21 along z-axis can be measured. If scale 7c is an absolute scale (each element non-ambiguously encoding a position value), absolute z-values can be determined.

As another possibility, the left side of positioning member 2b comprises another position encoder. In this case, not the read head or sensor unit is movable but an encoder, e.g. a magnetic target 7a, which is attached to or part of slide 21. The position of target 7a at z-axis or along guide rail 20 is determined by a fixedly position sensor unit 7b, extending along z-axis or the displacement or focus path, e.g. within left guide rail 20 as depicted. Position is for instance determined inductively or capacitively or according to any other physical principle suitable for position measurement. More than one position encoder as shown in figure 6b is for example used to measure more than one degree of freedom. The configuration as shown allows for example to determine a rotation of the position member 2b resp. of image sensor 60 about the y-axis by using (e.g. comparing) the measured z-values of the left and of the right encoder. Also, for example using a signal strength of a measurement signal or a size and/or position of an optically sensed position mark can be used to determine one or more additional DoF, as in principle known in the art of position sensors, e.g. a distance of target 7a to sensor 7b in y-direction or a shift of read head 7 to scale 7c in x-direction. Optionally, all six degrees of freedom (three translational and three rotational) of image sensor 60 resp. member 2b are determined by one or more sensors.

As another option, position of slide 21 or image sensor 60 is measured not over the complete or maximal possible focus or displacement path but only within one or more certain ranges. For instance, position measurement in z-direction is only effected from the minimal distance of image sensor 60 to the optical element up to some defined distance, e.g. half way from the optical element or a third or quarter of the displacement path. This allows for reduction of complexity and/or savings with respect to required compartment space.

As a quite similar option, the accuracy or precision of said position sensing varies along the measurement region, e.g. the image sensor's displacement path or along z-axis. For example, the measurement precision is the lower the greater the distance to the optical element is. Said the other way round, the requirements with respect to accuracy of position sensing are relaxed for near field compared to far field focus or infinity focus.

Such a variation or targeted adjustment of position accuracy of the positioning member 21 and/or its sensing -instead of a homogeneous or one-size-fits-all approach- can differ dependent on the respective degree of freedom. For example, whilst the z-axis position is measured with high precision in the near field (and/or only there), it is measured with low precision -or not at all- in the far field whereas the xy-positions are measured with low precision -or not at all-in the near field and with high precision in the far field (and/or only for a far field position range).

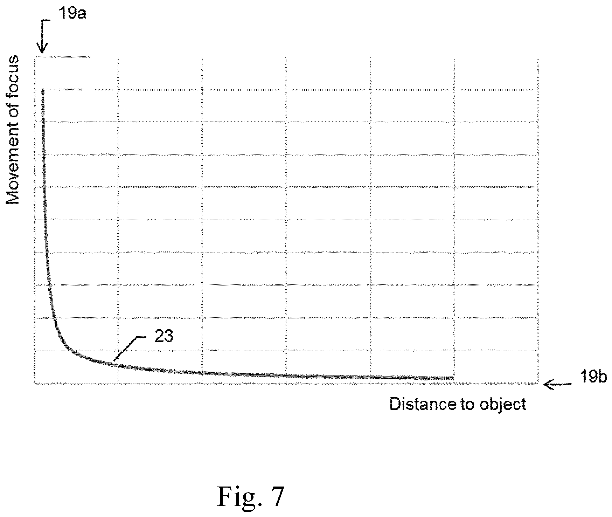

Likewise, the calibration as described above can also depend on the focus position, e.g. in that calibration is only done for far field positions or done with more calibration points for far field than for near field. Such a close meshed and wide meshed surveillance of the actual location of the image sensor 60 or focus position dependent on the focus position or varying along the image sensor's displacement path can be a smart adaption to a non-linearity of the focus path as referred to in following figure 7.

Figure 7 shows a chart 23 schematically depicting dependence of position adjusting of the image positioning member of its position or distance to the object. As can be seen, there is a non-linear dependency. Position adjusting depends for instance in such a way on the position in that an increment or step size depends as shown in the figure on the position: the nearer the object the higher is the focus movement. Accordingly, in the near field 19a, the focus positional accuracy or the precision of its measurement is higher than in the far field 19b.

This is e.g. achieved using a vario drive with a stepper motor with varying step width. Thus, the drive is adapted in such a way that a regular or conformal change of focus is achieved over the whole image sensor's focus path. A continuously homogenous focus change (equal throughout the whole displacement path) can for example be realized with a spindle with variable inclination or pitch or a cam plate. A vario drive can also be designed in such a way that a targeted unequal position change of the position member is realized, e.g. for said position dependent precision of the positioning and/or to allow faster focus change in one range and a slower one in another range.

Otherwise, there would for instance disadvantageously be a fast change of focus in one image sensor's position region and a slow change in another one and/or a time period for focus change would not be equally throughout the focus range.

Alternatively or additionally, an accuracy of the positioning is dependent on the position. That is that the drive is manufactured such that positioning tolerance is relaxing along the displacement or focus path, e.g. in a non-linear manner as shown.

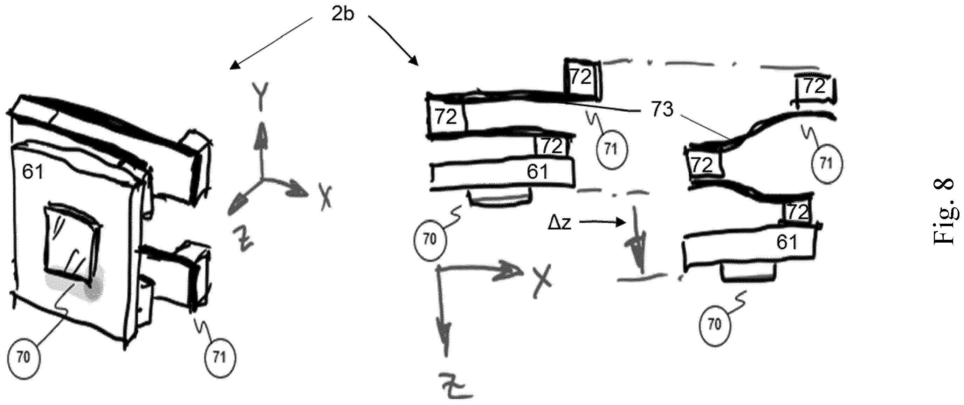

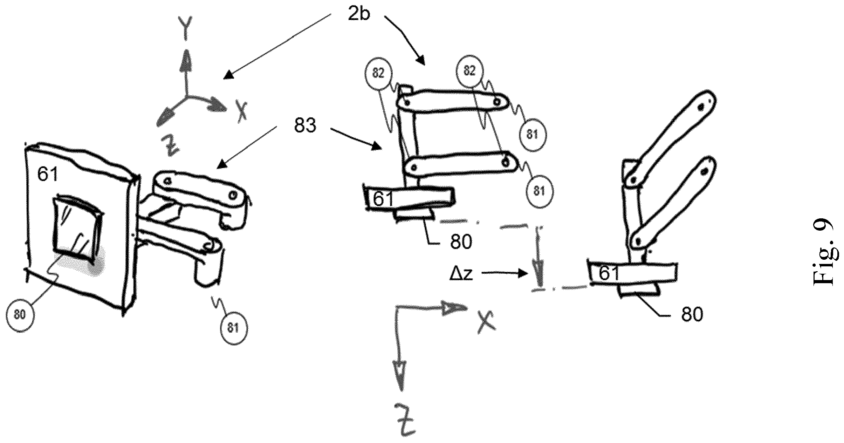

Figures 8 and 9 show further embodiments of image sensor positioning member 2b. In each case, the left side shows a 3D-view, whereas the right side shows a bird's eye view of first and second position of member 2b.

In figure 8, the image sensor 70 is held by a carrier 61 which is actuated by a solid state articulated coupling 71. The coupling comprises a number of spacing pieces 72 which are connected by flexible elements 73. Using e.g. a thread drive, the distance Δz in z-direction can be changed, e.g. from a first position in middle of figure 8a to a second one at the right of figure 8a.

Figure 9 shows another drive assembly for effecting a position change of image sensor 80 in course of focus change. Again, the image sensor 80 is attached to a carrier 61. In the example, the actuation is effected through a parallelogram swivel joint 83. The parallelogram swivel joint 83 comprises in the example two levers which rotates about rotation or joint points 82. A position change Δz along optical z-axis can therewith be done with high precision as shown in the middle and right of figure 8b.

The embodiments according to figures 8a and 8b allow only for a limited position change Δz which however is sufficient to achieve at least same focus range as in surveying telescope according to prior art due to the movement of the image sensor instead of a focus lens.

A skilled person is aware of the fact that details, which are here shown and explained with respect to different embodiments, can also be combined in other permutations in the sense of the invention if not indicated otherwise.

## Claims

1. Surveying and/or layouting telescope (1b) having an optical axis (5) and comprising
• at least one refractive and/or diffractive optical element (3), in particular a lens,
• an image sensor (13, 22, 60, 70, 80), in particular a CCD- or CMOS-sensor,
wherein the optical element (3) forms an optical beam path such that incoming light is directed to the image sensor (13, 22, 60, 70, 80),
**characterized in that**
the telescope (1b) comprises a movable image sensor positioning member (2b) for changing the position of the image sensor (13, 22, 60, 70, 80) along the optical axis (5) in order to adjust the telescope focus.

2. Surveying and/or layouting telescope (1b) according to claim 1,
**characterized in that**
the image sensor positioning member (2b) comprises as a linear movable slide (21) carrying the image sensor (13, 22, 60, 70, 80).

3. Surveying and/or layouting telescope (1b) according to claim 2,
**characterized in that**
the slide (21) is contactlessly preloaded with respect to at least one, in particular two, guide rail or guide pin (20), the guide rail or guide pin (20) extending in direction of the optical axis (5).

4. Surveying and/or layouting telescope (1b) according to claim 3,
**characterized in that**
the preloading is effected by magnetic force, in particular wherefore the slide (21) comprises a permanent magnet (26) as an opposite piece to a ferromagnetic piece (27).

5. Surveying and/or layouting telescope (1b) according to claim 1,
**characterized in that**
the image sensor positioning member (2b) is embodied as a solid state articulated coupling (71) or parallelogram swivel joint (83).

6. Surveying and/or layouting telescope (1b) according to any one of the preceding claims,
**characterized in that**
• the telescope (1b) comprises at least one position sensor (7-7d), for measuring a translational and/or rotational position of the image sensor position member (2b) and/or image sensor (13, 22, 60, 70, 80), in particular with respect to all six degrees of freedom, and/or
• deviations (17, 18) of a perfectly aligned movement along the optical axis (5) of the image sensor positioning member (2b) are compensated by a relocation of a digital crosshair of the telescope (1b) and/or by selection of an image section.

7. Surveying and/or layouting telescope (1b) according to claim 6,
**characterized in that**
• the accuracy of said translational and/or rotational measurement is dependent on the displacement path position and/or
• the position sensor (7-7d) is designed for measuring position only within a part of the displacement path (9b) of the image sensor position member (2b).

8. Surveying and/or layouting telescope (1b) according to any one of the preceding claims,
**characterized in that**
a positional accuracy of the image sensor positioning member (2b) along its displacement path (9b) is adjusted dependent on its position.

9. Surveying and/or layouting telescope (1b) according to any one of the preceding claims,
**characterized in that**
the image sensor (13, 22, 60, 70, 80) is shiftable in a direction substantially perpendicular to the optical axis (5) for effecting imaging with pixel shift.

10. Surveying and/or layouting telescope (1b) according to any one of the preceding claims,
**characterized in that**
the telescope (1b) comprises a vario drive for driving, in particular steplessly variable, the image sensor positioning member (2b), particularly wherein the drive comprises a spindle with variable pitch or a cam plate.

11. Surveying and/or layouting telescope (1b) according to any one of the preceding claims,
**characterized in that**
the telescope (1b) comprises
• a measurement beam source (30, 32), in particular a laser source,
• beam guiding optics (34-36), in particular a beam combiner (35, 36), for guiding the measurement beam such that it is emittable in direction of the optical axis (5) onto an object to be measured through the optical element (3),
• a beam decoupler (37) for separation of measurement light reflected by the object, and
• a light detector (31), in particular an avalanche photo diode, for detecting at least part of the measurement beam reflected by the object.

12. Method for focus adjustment of a surveying and/or layouting telescope (1b) having an optical axis (5), the telescope (1b) comprising a
• at least one refractive and/or diffractive optical element (3), in particular a lens,
• an image sensor (13, 22, 60, 70, 80),
wherein the optical element (3) forms an optical beam path such that incoming light is directed to the image sensor (13, 22, 60, 70, 80),
**characterized in that**
for an, in particular automatic, adjustment of the telescope's focus, the image sensor (13, 22, 60, 70, 80) is moved along the optical axis (5).

13. Method according to claim 12,
**characterized by**
an automatic calibration for compensation of position errors of the image sensor (13, 22, 60, 70, 80), wherein at least two automatically selected features of the environment situated in different distance to the telescope (1b) are automatically focused in at least two different poses of the telescope (1b) each.

14. Method according to claim 13,
**characterized in that**
the extend of calibration depends on the focus position of the image sensor (13, 22, 60, 70, 80), in particular wherein there is high accurate error compensation in a near field focus position (19b) compared to a far field focus position (19a).

15. A non-transitory computer program product, comprising program code which is stored on a machine-readable medium, in particular of a geodetic instrument comprising a surveying and/or layouting telescope (1b) according to claim 1, and having computer-executable instructions which when executed cause a computer to perform the method according to any one of claims 12 to 14.
